# EUROPEAN PATENT APPLICATION

(11) **EP 1 469 663 A1**
(43) Date of publication of application: **20.10.2004**
(21) Application number: 04007911.3
(22) Date of filing: 01.04.2004
(51) Int. Cl.: H04M 3/56, H04M 7/00, H04L 12/18

(54) **Method and apparatus for dynamic audio and web conference scheduling, bridging, synchronization, and management**

(30) Priority: 02.04.2003 US 406347
(71) Applicant: Genesys Telecommunications Laboratories, Inc., Daly City, CA 94014 (US)
(72) Inventor: Zhakov, Vyacheslav I., El Sobrante, CA 94803 (US); Sayko, Vyacheslav V., San Bruno, CA 94066 (US); Epiktetov, Mikhail Gennadyevich, San Mateo, CA 94401 (US); Seignol, Thierry, Corte Madera CA 94925 (US); Frazer, Mathew, San Francisco, CA 94118 (US)
(74) Representative: Dreiss, Fuhlendorf, Steimle & Becker

(57) **Abstract**

A software suite for enabling and managing a conference hosted on a network for communication has, a client application serving as a user interface for configuring a conference and for receiving notification thereof, a parent application including a server component for managing conference settings and for serving notifications and alerts related to a scheduled conference, and a conference bridging application for physically bridging incoming communications into an active conference in session. In a preferred embodiment the software suite controls both telephony apparatus and data-network apparatus including a Groupware system to enable seamless conferencing using more than one type of communications device and more than one type of synchronous media.

## Description

### Field of the Invention

The present invention is in the field of audio teleconferencing and Web conferencing software, and pertains particularly to methods and apparatus for enabling bridged teleconferencing using both telephony-based and Web-based media with scheduled notification.

### Background of the Invention

One of the most useful tools in telecommunications and in Web-based communications is audio conferencing. Audio conferencing and Web-based conferencing are becoming increasingly popular. The increased popularity is partially based on the fact that current systems enable organization of a conference in either of the two popular mediums (Telephone, Internet) without requiring an in-person meeting. Typically, audio conference participants speak to one another through a telephone or headset, and each participant may be widely remote from the other participants of the conference.

Known audio conferencing solutions include special audio conference services provided by external organizations that provide scheduling, establishment, and management of sessions, typically with a human operator or an automated operator. Special hardware solutions are available that are connected in architectural terms to corporate-owned private branch exchange (PBX) telephony systems. Web-conferencing services are available that rely on a central server to perform the conference bridging and may also have session scheduling services such as a posting service.

Special hardware solutions are costly to implement in terms of required software and hardware pieces. Web-based services generally require the use of a computer for participants and are not typically compatible with cellular or other types of telephone handsets. In other cases of hardware-based systems, all users may be required to have a proprietary handset such as the same model of cellular telephone using the same telephone service provider.

The inventors are aware of an audio conference system taught by U.S. patent 5,619,555, hereinafter '555. '555 teaches a hardware/software audio conferencing solution whereby a participant in a conference interfaces with the system through a graphical user interface (GUI) running on a remote computer or workstation. In order to participate in or join into a current conference he or she operates through the GUI to transmit a signal over a local area network (LAN) to a connected central server. The central server checks authenticity of the user by examining database information. Finding the user authorized, the server controls a connected telephone system and causes the telephone system to call the user at his or her telephone number. The user can then join the audio conference by answering the telephone.

A drawback of the system of '555 is that it requires the use of a connected telephone of the telephone system for conferencing and all other participants also must use telephones connected to the system. Likewise, there is no flexibility for conducting conferences wherein more than one synchronous media type is employed among users engaged in the conference.

The inventors are also aware of an audio conferencing system referenced by U.S. patent number 5,483,587 hereinafter referred to as '587. The system of '587 uses a call conference controller and a dedicated piece of hardware used as a conference bridge. The conference bridge uses available ports for connecting conference parties together, the parties each using a telephone. In order to practice the system, a user sends a conference request to the bridge, the bridge checks resource availability for the scheduled conference date and time, and reserves the required resources for the conference if they are available.

To create the conference a call controller causes a telephony operator console to be tied to a conference port on the bridge. The call controller then originates a telephone call to each conference participant via a conference port and then connects the participant to the operator console via the bridge. Once connected, the operator console informs the participant of the active conference. Similar to the system of '555, the system of '587 lacks desired flexibility in that all participants must be connected to a special hardware using connected telephones. Also, there is no flexibility for conducting conferences wherein more than one synchronous media type is employed among users engaged in the conference.

Large and mid-size corporations, which are the most popular consumers of audio conferencing services, generally have at least one corporate-maintained PBX telephony system and often a network of them integrated among in-place corporate Groupware systems that are known in the art. Groupware systems are network-based or network-capable communications tools that can be shared by a plurality of users in asynchronous and synchronous manners. However, conferencing has been limited to pre-determined media choices such as the telephone or a particular network-based media. Users operating hardware or groupware media types disparate from the predetermined media and hardware choice cannot be seamlessly bridged into an active conference.

Other popular and available conferencing solutions known to the inventors similarly focus on only one type of media wherein every participating user is limited to that type being used in the conference.

Therefore what is clearly needed is a method and apparatus that enables organization and notification of audio conference sessions among users having access to corporate PBX and Groupware systems wherein no additional hardware or appreciable software is required and wherein more than one diverse media type can be included as optional communications tools available within or are instantiated from within the domain of the active conference. Such a system would also enable device independent participation including dynamic addition and synchronization of additional media types for audio session enhancement.

### Summary of the Invention

In a preferred embodiment of the present invention a software-hardware system for managing a conference of at least two participants communicating on a communications network is provided, comprising at least one conference node supporting a plurality of communication ports, the node accessible to the communications network, at least one sever node connected to the conference node, and a computing platform connected for communication to the at least one sever node. This system is characterized in that a user operating from the computer platform using a client software application configures and initiates the conference, the conference scheduled for launch by the at least one server node running a parent software application, the at least one server node managing the conference settings and configuring the at least one conference node for physically hosting the initiated conference in time for the scheduled conference execution, and wherein conference participants can access the conference from dissimilar network domains utilizing dissimilar communications apparatus.

In some preferred embodiments of the system the communications network comprises a connection-oriented-switched-telephony network and a data-packet-network, the system functioning to integrate the telephony environment with a data-network-based Groupware system environment, and the telephony network may be a public-switched-telephone-network and the data-packet-network is the Internet network. Also in some preferred embodiments the conference is an audio conference and the communications devices capable of participation include a PSTN-based telephone, an Internet-based telephone and a wireless network telephone.

In other preferred embodiments of the system the conference is an audio conference wherein certain ones of the participants employ PSTN-based communications devices and certain ones of the participants employ data-network-telephony applications to access and participate in the same conference. In still other embodiments the conference is an audio conference integrated with a separate Web conference, the Web conference conducted using a synchronous Groupware application. In these embodiments the Web-conference may be initiated from within the domain of the audio conference after the audio conference has begun.

In still other embodiments at least one conference node is a PBX telephony system. In the computing platform is the operating platform of a computer station. In still others the computing platform is the operating platform of a communications device, or of a computer peripheral device. In still other embodiments the system comprises a transaction server application functioning as a proxy server between the parent application and the conference node, the transaction server responsible node configuration.

In yet other embodiments the server node is a WEB-server and the conference node is a Web-server, and in yet the server node and the conference node are the same physical machine.

In another aspect of the invention a software suite for enabling and managing a conference hosted on a network for communication is provided, comprising a client application serving as a user interface for configuring a conference and for receiving notification thereof, a parent application including a server component for managing conference settings and for serving notifications and alerts related to a scheduled conference, and a conference bridging application for physically bridging incoming communications into an active conference in session. This suite is characterized in that the software suite controls both telephony apparatus and data-network apparatus including a Groupware system to enable seamless conferencing using more than one type of communications device and more than one type of synchronous media.

In some preferred embodiments of the suite the client application is distributed to an end node, the parent application runs on a network server, and the bridging application is distributed to a processor controlling a PBX telephony switch. Also in some preferred embodiments the communications network comprises a connection-oriented-switched-telephony network and a data-packet-network, and the telephony network may be a public-switched-telephone-network and the data-packet-network is the Internet network. Further, the suite may integrate a PSTN-based telephony system with a DPN-based Groupware system. Still further the conference may be an audio conference and the communications devices capable of participation include a PSTN-based telephone, an Internet-based telephone and a wireless network telephone. In addition, the conference may be an audio conference wherein certain ones of the participants employ PSTN-based communications devices and certain ones of the participants employ data-network-telephony applications to access and participate in the same conference. Still the conference may be an audio conference integrated for command and management functions with a Web conference using a synchronous Groupware application.

In some embodiments of the software suite the Web-conference is initiated from within the domain of the audio conference, and in others the client application includes an electronic messaging application integrated with a common object modelling application. In still others the conference bridging application runs on one of a PBX telephony switch or on a processor having connection to the switch. In yet other embodiments there may further be a transaction server application functioning as a proxy server between the parent application and the conference bridging application. In still other embodiments the parent application has access to participant data including participant itineraries stored and managed by a Groupware system, certain portions of the data used to validate a submitted conference request.

In yet another aspect of the invention a method for creating and executing a multimedia conference hosted on a communications network is provided, comprising steps of (a) generating a conference request including participant identification and date and time parameters for conference execution; (b) submitting the request to a remote server;(c) processing the request at the server for correct data and if granted returning conference settings to the requestor; (d) sending notification of the conference including conference settings to the invited participants; and (e) configuring a conference node to physically bridge the conference participants upon time-based execution.

In preferred embodiments of the method the communications network comprises a connection-oriented-switched-telephony network and a data-packet-network, with the multimedia conference set to integrate the telephony environment with a data-network-based Groupware system environment. In some embodiments, in step (a), the conference request is generated from a client application running on a computer platform. In other embodiments, in step (a), the computing platform operates one of a computer, a communications device, or a computer peripheral device. In still other embodiments, in step (a), participant identification information is known to a Groupware system the information made available to the client application. In still others, in step (a, the generated request includes identifying the network host and media presence for conference. In yet other embodiments, in step (a), the date and time parameters include recurrence settings.

In yet other embodiments of this method, in step (b), the server has access to updated information about identified participants including itinerary. In other embodiments, in step (c), the returned conference settings include modifications to the submitted time and date data, the modifications based on most recent availability data of the participants. In still other embodiments, in step (a), all of the most recent participant information including itinerary is available rendering step (c) unnecessary. In yet others, in step (d), vehicles utilized to send the notifications are selected in part according to participant preferences. In still others, in step (d), notifications are sent by one or a combination of Groupware messaging system, e-mail system, or IVR-assisted telephone call, and in still others, in step (d), the notifications contain interactive option for response with a reminder request.

In yet another aspect of the invention a method for launching a second conference from within the domain of a first conference in session is provided, comprising steps of (a) engaging an interactive option to add a media application as a second conference tool; (b) identifying the participants of the conference that will have access to the tool; (c) configuring a second conference bridge for the new media type; and (d) sending notification to the active participants, the notification containing instructions and or mechanisms for enabling access to the second conference.

In preferred embodiments of this method, in steps (a) and (b), the interactive option including participant identification is activated by an application-recognized touch-tone button sequence performed from a telephone during an audio conference, the second conference activated being one of a text-based session, a white board session, or a collaborative browsing session made available to the identified participants. In some preferred embodiments of this method, in step (a) and (b), the interactive option including participant identification is activated by an IVR-recognized command sequence spoken during an active audio conference, the second conference activated being one of a text-based session, a white board session, or a collaborative browsing session. In still other embodiments, in step (a) and (b) the interactive option including participant identification is activated by a series of computer mouse operations performed from a computer interface during an on-line conference session, the second conference activated being one of an audio conference.

In yet other embodiments of the method, in steps (a) and (b), the interactive option including participant identification is activated by a series of computer keystrokes performed from a computer interface during an online conference session, the second conference activated being one of an audio conference. In still others, in step (c), the second bridge configured controls a chat server. In others, in step (c), the second bridge configured controls a telephony switch. In some cases, in step (c), the second bridge configured controls a computer end-node, while in some other cases, in step (d), the notification contains a pass code and a telephone access number. In yet other instances, in step (d), the mechanism is an embedded hyperlink providing browser navigation instructions.

In still another aspect of the invention a software application for enabling and managing a scheduled telecommunications conference hosted in a conference node is provided, comprising a conference management component, and a conference bridging component. This application is characterized in that the conference management component optimizes to a minimum the number of physical connections required of the conference by the conference bridge through pre-identification of and aggregation of participants accessing the conference through a same local switch and merging those connections into a single connection from the local switch to the conference node.

In some preferred embodiments of the application the conference node and the local switch are telecommunications switches. In other preferred embodiments the local switch is a telephony switch and the conference node is a Web server. In still other embodiments the conference is an audio conference integrated for command and management functions with a Web conference using a synchronous Groupware application.

### Brief Description of the Drawing Figures

Fig. 1 is an architectural overview of a PBX/Groupware audio conferencing system integrated with a communications center infrastructure for practicing audio conferencing according to an embodiment of the present invention.
Fig. 2 is a block diagram illustrating functional software layers of the software of Fig. 1 and their performance criterion.
Fig. 3 is a screen shot of the client application of Fig. 2 illustrating a conference creation confirmation according to an embodiment of the invention.
Fig. 4 is a screen shot of the client application of Fig. 2 illustrating a sent notification of a scheduled conference to an invited participant according to an embodiment of the invention.
Fig. 5 is a block diagram illustrating general telephony hardware connection architecture for an audio conference according to an embodiment of the present invention.
Fig. 6 is a block diagram illustrating a network architecture for setting up and managing conferences according to an embodiment of the present invention.
Fig. 7 is a process flow diagram illustrating steps for creating and launching an audio conference according to an embodiment of the invention.
Fig. 8 is a process flow diagram illustrating steps for synchronizing a Web-based groupware application into an audio conference according to an embodiment of the present invention.

### Description of the Preferred Embodiments

The inventors provide an audio conferencing system that is flexible in use such that more than one media type and communications device can be included within the conference domain as authorized conferencing tools from within the domain of an active conference session.

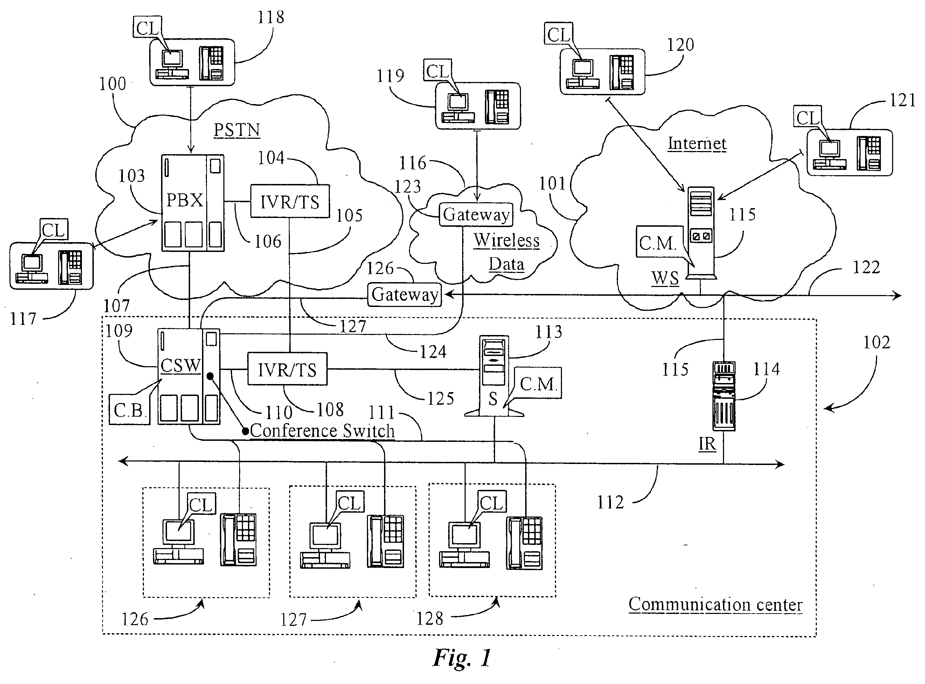

Fig. 1 is an architectural overview of a PBX/Groupware audio conferencing system integrated with a communications center infrastructure for practicing audio conferencing according to an embodiment of the present invention. A communication center 102 is illustrated in this example and serves as an applicable hosting embodiment for practicing the present invention. Connected to and reachable from center 102 are at least 3 networks adapted for communication. These communication networks are a network 100, a network 101, and a network 116 all denoted by a network cloud icon. In this example, network 100 is a public-switched-telephony-network (PSTN) while network 101 is the well-known Internet network and network 116 is a wireless communications network.

PSTN network 100 may instead be a corporate or private telephony network. The inventor chooses to illustrate a PSTN network because of a high public access characteristic and for geographic considerations as a preferred network. PSTN 100 has a private branch exchange (PBX) telephony switch 103 illustrated therein and adapted as a telephony switch that is geographically local to communication center 102 and used as a logical last point for call routing into center 102. In one embodiment PBX switch 103 is part of a network of like switches enhanced at least for CTI intelligence. It is noted herein that PBX switch 103 may be another type of switch without departing from the spirit and scope of the present invention, for example, an automated call distributor (ACD).

PBX switch 103 is enhanced for computer telephony integration (CTI) by a CTI processor illustrated as processor 104. Processor 104 provides routing and other intelligent capability to switch 103 via a CTI link 106. Processor 104 is adapted by software known to the inventor for providing certain intelligent functionality to switch 103 and to provide some measure of call control that can be exerted from within center 102. For example, an interactive voice response (IVR) capability that is fairly well known in the art is illustrated along with a transaction server capability (TS), which is an intelligent routing software known to the inventor. Other like software applications can similarly be provided to processor 104 and adapted to provide certain control for functions for intelligent control of switch 103 without departing from the spirit and scope of the present invention. The inventors choose to illustrate TS and IVR capabilities in this example because these are the capabilities that will come into play during actual practice of the invention.

PBX 103 is connected to a conference switch (CSW) 109 maintained within communication center 102 by way of a telephony trunk or trunks 107. CSW 109 is maintained by the corporate entity hosting the audio conferencing software of the invention. For explanatory purposes it may be assumed as well that the same corporate entity also hosts communication center 102 although that is not required to practice the present invention. CSW 109 may be an ACD or another type of switch as well as a PBX switch. The inventors choose PBX switches for purposes of convenience only. CSW 109 may function in a dedicated mode as a conference switch only. In this case another telephony switch would be present for handling normal PSTN traffic. In another embodiment CSW 109 may be adapted to handle conference traffic and normal telephony traffic. It will be apparent as well that there may be more network-connected switches maintained within center 102 than are shown in this example.

Like PBX 103 described above, CSW is CTI enhanced by way of a CTI processor 108 connected thereto by a CTI link 110. Processor 108 is analogous in this example to processor 104 in terms of software and capabilities. For example, processor 108 has an instance of IVR and TS installed. However, in another example, processors 104 and 108 may differ in dedicated function without departing from the spirit and scope of the invention. While basic capabilities may remain similar in both processors there may be separate and disparate software routines distributed for execution at each processor for controlling different aspects of telephony at the respective connected switches.

Processor 108 has connection to processor 104 within network 100 by way of a digital data network 105. Digital network 105 provides, in this case, a corporate control capability for controlling switch 103 at network level. For example, intelligent routing (TS), interaction with callers (IVR), and other routines that are available to CSW 109 may also be extended to switch 103 by way of network 105, processor 104 and CTI link 103. There may be several network switches enhanced for functionality in this way. The distributed software and connective network enable information about callers to arrive within center 102 ahead of actual calls.

Network 101 is in this preferred architecture the Internet network partly because of high public access characteristic and geographic reach. However, network 101 may be any other type of digital communication network such as a corporate wide-area-network (WAN), an Ethernet, an Intranet, or some other digital network, which may include sub networks. Internet 101 has an Internet backbone 122 extending there through that logically represents all of the lines, connection points, servers and other equipment that make up the Internet network as a whole. Therefore there is no geographic limitation to practice of the present invention.

Internet 101 has a Web server (WS) 115 provided therein and connected to backbone 122. WS 115 is an electronic server adapted to serve electronic information pages (Web pages) and to provide other connection and contact services for clients of communication center 102 that access such services through the Internet using an Internet-capable device. Internet network 101 is accessible from center 102 by way of an Internet protocol router (IR) 114 using an access line 115 that provides Internet connectivity between router 114 and WS 115. Users may also access CSW 109 from network 101 through an illustrated network gateway 126, which is adapted according to telephony protocols to convert digital data to data that can be transferred through PSTN 100.

Network 116 is a wireless data network and is in a preferred embodiment a digital network. Network 116 may be a public or private network, including a satellite-enabled network. Users operating wireless communications devices may access center 102 through wireless network 116. A wireless gateway 123 provides access for users operating wireless telephony devices to CSW 109 over a data line 124. Data line 124 is, in this example, a connection-oriented-switched- telephony line or cable.

Gateway facilities such as gateway 123 and gateway 126 are common and are used for bridging communication between disparate networks. One with skill in the art of telephony communications will appreciate that communication from one network into another is technically feasible, practical, and is currently practiced in state-of-art telephony communication. Likewise, communication sourced from PSTN 100 or from wireless network 116 may enter Internet network 101 for connection to WS 115 or other like specially adapted servers.

In a preferred embodiment of the present invention a conferencing software suite is provided and distributed strategically on suitable equipment used to practice the present invention. Center 102 has a server (S) 113 deployed therein that is adapted as an application server. Server 113 has an instance of conference manager (CM) software distributed thereto that is adapted as a parent or main application of the software suite of the present invention. Server 113 is connected to a communication center local-area-network (LAN) 112. LAN 112 also provides connectivity for communication center workstations illustrated herein as workstations 126, 127, and 128.

Workstations 126, 127, and 128 logically represent typical manned workstations as known in the art of telephony contact centers. Each station in this example has a LAN connected personal computer (PC) and a telephone connected to CSW 109 by way of internal telephony wiring 111. In this example, center 102 is multimedia capable meaning that agents operating from stations 126-128 can participate in traditional COST telephony communication by telephone and any PC-based communications media by way of LAN-connected PC.

Server 113 as previously described above hosts a CM application described as a parent application of the software suite of the present invention. Another instance of CM is also illustrated with respect to WS 115 hosted within the domain of Internet network 101. CM, which includes a server component functions as a main application for managing various aspects related to setting up and enabling a conference carried on between 2 or more individuals. In this example, conference users are illustrated herein for exemplary purposes only as workstations having at least telephone and PC capabilities although it is not specifically required in order to practice the present invention. Illustrated potential conference participants include users at each of workstations 126-128, participants 117 and 118 (PSTN), participant 119 (wireless data network), and participants 120 and 121 (Internet network).

Each potential participant is illustrated herein as having at least telephone capabilities and PC capabilities for explanative purposes only. In actual practice each of the mentioned participants can use a variety of instruments to participate in a same conference. Likewise, each of the mentioned participants can use a variety of media types generally associated with Groupware systems. For example, Instant Messaging (IM), including Simple Messaging Services (SMS), Presence Applications, IP telephony applications, collaboration applications including white board, file sharing, co-browsing, and so on are included in some of these Groupware application types.

In a preferred embodiment, the software of the present invention incorporates Groupware functionality into an audio conferencing environment. Although not illustrated in this example, a Groupware system is assumed to be present, active, and available to all participants. Such a system may be externally hosted from the domain of center 102, perhaps in WS 115 or internally in application server 113. In a preferred embodiment, all of the user information and parameters available to user practicing Groupware communication are also available to the software of the present invention.

In one embodiment of the present invention, all participants 117-121 and 126-128 have access to corporate Groupware systems that are specially adapted for the purpose of group communication and collaboration both in asynchronous and in synchronous fashion. In this embodiment all participants are to one degree or another colleagues or associates. For example, participants 126-128 can be onsite sales or service agents while the remote participants 117-121 can be off-site home office workers, perhaps knowledge agents. It may be that all of the participants do not work for or are not implicitly associated with a same company or association. In fact the only commonality among the illustrated participants 126-128 and 117-121 may be that they have access to the software of the present invention and are connected through a Groupware application. In this regard each participant has a client application (CL) installed on one or more network-capable devices available to the participant. CL is a client application to CM and comprises essentially a user interface for initiating a conference and communicating conference requests to the appropriate server running CM. In a preferred embodiment CL is also adapted to display information from a server running CM such as a reminder of a scheduled conference and the parameters surrounding the conference.

A software instance of a conference bridge (CB) is illustrated in this example and is distributed in this case to CSW 109 designated as the conference switch. It is noted herein that CSW 109 is also termed a G3 capable telephony switch. CB software is responsible for authenticating participants at the time of enter of an active conference, allocates appropriate resources, and merges the authorized incoming calls into the active conference.

In one embodiment of the invention, two or more images of CM software may be provided on servers associated with separate media parameters and protocols as well as two or more images of CB. For example, in this embodiment there is an instance of CM on switch 109 and an instance of CM on WS 115. An instance of CB may also be provided on WS 115. It is also noted herein that an instance of CM and CB may be provided as a single distributed component of combined functionality installed on one server. All that is required to practice the present invention is the capability of bridging each participant into a single conference. This can be accomplished according to embodiments of the present invention wherein the participants are using various devices, media, and whom are accessing the conference from disparate networks. Moreover, the combined hardware and software system of the present invention can be used with additional conference bridges of all types.

In this embodiment it may be assumed that each of participants 117-121 and 126-128 may be invited to participate in a given conference and that participants may engage in the conference using implements that are rather at hand instead of implements that may be required or prescribed. For example, participants 126-128 and 117-118 may engage in an audio portion of a conference using a typical COST telephone while participant 119 is using a digital cellular telephone and participants 120 and 121 are using IP telephony applications based on their PCs. In this example it is not required that they all use the same equipment in order to participate. Likewise, in addition to the audio portion of the conference to which all are engaged, a PC-based media such as a co-browsing session, collaborative white board session, or a Web-chat can be instantiated by any one of the participants wherein all invited participants already engaged in the audio portion of the conference may simultaneously engage in the PC-based portion of the conference.

In the above-mentioned case, the second conference may utilize a second conference bridge configured as a result of activation of an interactive option provided within the domain of the first conference. All that is required of the participants to engage in the second conference, which in this case is an online conference, is that they have immediate access to a network-capable device that is connected and on-line, the device having the specific components available for practicing the PC-based media portion of the conference.

To further illustrate the above example, consider that all of the participants have immediate access to a network-capable device that is capable of browsing Web pages sourced from a server within the domain of network 101. Then while engaged in an audio conference, one of the participants, perhaps a conference leader, can invite all to connect on-line to accept and receive a co-browsing or "follow me" session in which all of the participants browser applications are caused to navigate to the start page of the session. If one or more of the participants is using a "light browser" such as one installed on a wireless application protocol (WAP)-enabled telephone, then that user or users would receive the display version of the Web-browsing session that is suitable for their particular device display as long as WAP is supported.

The above example reflects a groupware scenario wherein all of the participant's parameters and device protocols are known from the point of the CM-enabled machine or machines. In this way, traditional Web-based groupware applications can be incorporated into a single conference along with an audio component without requiring all of the same access devices, access paths, or access media.

In practice of the invention using the exemplary architecture of this example a potential conference can be initiated by any one of the illustrated participants by using CL as an interface to request the conference. CL instances communicate with CM instances, which in turn provide the configuration parameters to CB instances. CL utilizes some existing messaging component modified with a common object-modelling (COM) component that creates a conference object in order to send the object to the conference manager to process the object thus setting up the conference. The management component can use a variety of media to confirm the existence of a pending conference and to alert invited participants and provide instructions for accessing the conference.

Examples of alert or reminder messaging can include e-mail reminders, automated telephone reminders, text messaging reminders, reminders through presence-capable applications, and even reminders to third party voice or paging services. Conference parameters including participant information, availability information, device availability information, and network presence information can be accessed from a central data storage facility (not illustrated), which may be a Groupware facility, by a CM application processing a conference request. If a CL is successful in being granted a requested conference, the CM sends confirmation back to the CL that initiated the request. The CM also reminds or alerts all of the invited participants about the upcoming conference providing the conference access protocols and mechanisms (executable links if required) to each of the invited participants.

In another embodiment of the present invention, a dedicated CL application is not absolutely necessary for practicing the present invention, at least in a limited form. For example, a participant may not have the CL application installed on an available network-capable device, but may have a presence application including linking capabilities to other collaborative applications like VoIP, Net-phone, or a program such as Net-meeting. In this case the CM application is adapted to use those existing media types of the participant to send a reminder of the conference including access instructions. The only limitation is that the particular participant could not initiate a conference without the CL application and the reminder information would be limited to the display characteristics of the chosen media vehicle. A participant that does not have a CL application available can still participate in a conference using more than one media type simultaneously provided that the particular media type interfaces and applications are supported by the parent application.

It will be apparent to one with skill in the art that there may be more than one conference switch analogous to CSW 109 without departing from the spirit and scope of the present invention. There may be for example, many similar switches addressed and networked together. CB software is not specifically required to run from switch 109. In one embodiment, CB software is provided to execute on processor 108. In still another embodiment software CB is provided with CM software on server 113 as a single parent application. There are many configuration possibilities. The present invention may be practiced in conjunction with DNT telephony, or video conferencing using multiple video-conference bridges or other media types where conference bridges are available.

In still another embodiment, CSW 109 is not a dedicated switch but is a multi task switch meaning that it can handle both non-conferencing traffic for normal agent-level-routing, and conference bridging of conference participants.

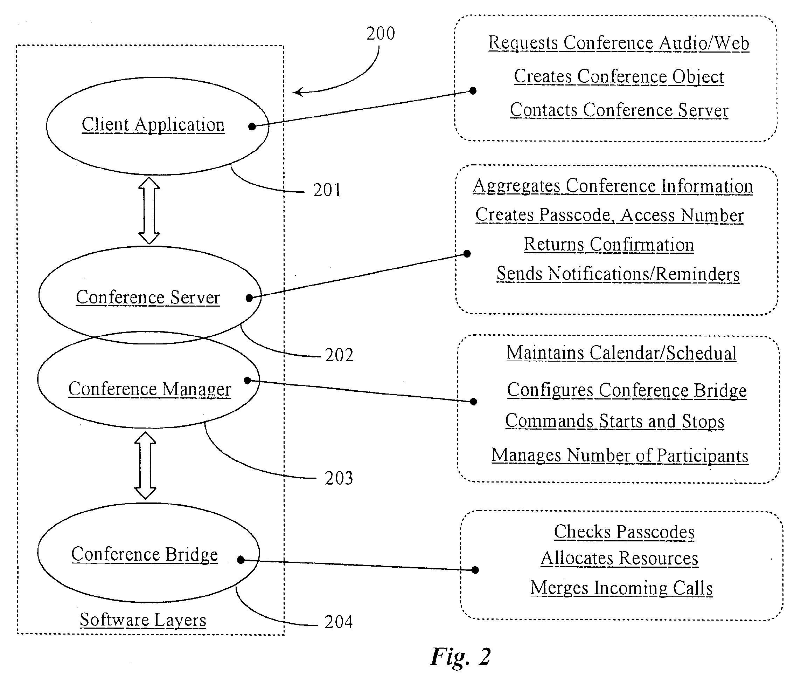

Fig. 2 is a block diagram illustrating functional software layers 200 of the system of the invention and their performance criterion. Software 200 is analogous to instances of CM, CB, and CL described with reference to Fig. 1 above. A client application 201 is illustrated as part of or a layer of software 200 and is analogous to CL instances running on participant computers or client devices 117-121 and 126-128 described with reference to Fig. 1. Client application 201, in a preferred embodiment, is a modified version of a traditional messaging client such as Microsoft Outlook^{TM}. For example, the user interface and function retains the original functions of the messaging client, but the client is enhanced for practice of the invention through provision of a communications object manager (COM) application that provides the added functionality of being able to initiate a conference and display results of the action as well as result frames of alerts, reminders, and presence parameters.

In another embodiment of the present invention client application 201 comprises a new interface component instead of borrowing function from an existing interface component. In still another embodiment, the interface comprises that of another type of communications application other than an e-mail messaging program such as presence information and text messaging application. There are many possibilities.

Application 201 serves as an interface through which a conference may be configured and set in motion. An associated information block (illustrated) displays the primary capabilities of CL 201. Reading from top to bottom in the associated information block, application 201 is executed whenever a user desires to instantiate and schedule a conference (Request conference Audio/web). Application 201 is used to create a conference object (Creates Conference Object). A conference object is essentially a conference request that contains all of the participant information taken from a Groupware system data cache or an address book or other participant information cache. The conference object or request details the primary media type or types desired for the conference, the desired window of time for conducting the conference (time and date), the number of invited participants, any desired recurrence times for the conference and at least all of the names or other identifying criterion of the desired conference participants.

In a preferred embodiment of the present invention a conference is initiated using information that is stored in a corporate Groupware database that has all of the required participant parameters including phone numbers, e-mail addresses, IP addresses, media devices available, and so on. Typically a Groupware system will also publish itinerary or calendar information of each potential or eligible conference participant that may be selected for invitation to a conference. Once all of the desired parameters are populated into appropriate fields of the user interface, the client application contacts a conference server component illustrated herein as conference server 202 and submits the conference object for processing.

Server 202 is the server component of a conference manager application 203, which is analogous to CM running on server 113 and on WS 115 described with reference to Fig. 1. Conference server 202 aggregates conference information and stores the conference information in a suitable data storage facility using a database application adapted for the purpose. Server 202 creates a password or code and an access number for accessing the scheduled conference. After the conference object has been processed to the point where the conference is validated and scheduled, server component 202 returns notification of successful conference set-up to the participant who initiated the original conference request.

In one embodiment, the conference server is responsible for providing additional conference information required in setting up a conference. In this embodiment, the client application is used to identify the desired participants from list local to the participant such as an associated address book listing. The participant also includes desired settings (time and date) as well as any recurrence schedule. However, the server component checks the availability of the participants submitted in the conference object and may return a suggested window of opportunity wherein all of the participants are determined to be available according to individual itineraries. In this embodiment, the conference server may also suggest specific device and media types to include for some of or all of the selected participants.

Server 202 sends conference notifications and or conference reminders to all of the participants scheduled to attend the conference. In one embodiment, notification is sent to all participants immediately after a conference is scheduled using one or more media types that may be selected based on personal preferences. For example, server 202 may cause e-mail notifications to be automatically generated and sent to some of the participants who have indicated in personal preference settings that they prefer e-mail notification while automated IVR-assisted telephone notifications may be sent to other participants and so on.

Conference manager application 203 is, in a preferred embodiment integrated with conference server application 202 as a single software component with server component 202 being the communication tool of the conference management component. An information block illustrated in association with conference manager 203 illustrates some of the primary functions of the application. Conference manager 203 maintains the conference calendar and schedule information for the pending conference. The conference manager also configures a conference bridge application illustrated herein as a conference bridge application 204 using server component 202 at an appropriate time before a scheduled launch of a conference.

Conference manager 203 maintains or manages the number of conference participants entering and leaving the conference at the time of the active conference. For example, if additional unscheduled participants are invited to join the conference in session then the conference manager performs additional management functions required to enable addition of those additional participants including additional configuration operations that may be required to enable the conference bridge application to include the new participants. The conference manager keeps a running tally of which participants are active in session, leave the session, or are added to the session. Therefore, the exact number of active and inactive participants is always known. It is noted herein that conference manager application 203 uses call-merging technology when configuring a conference bridge for a conference. Using this technology, application 203 merges or "aggregates" participants that call into to the conference number over a single line and port. In this way all of the conference participants can enter the conference switch using only one line from the nearest local telephony switch.

Conference manager application 203 can report status results to requesting parties through conference server application 202. For example, information related to a scheduled conference including active states of a conference in session is available through use of client application 200. A potential participant may request that the conference manager add him or her to an active conference by using client application 202. Upon receiving a request from a previously unscheduled participant, conference manager 203 can check with the conference leader by automated messaging or IVR interruption to gain permission on behalf of the participant to enter the conference. The conference leader can respond to the conference manager through the text-messaging vehicle or through voice prompt to allow or deny the request. If allowed, the conference manager utilizes conference server application 202 to pass the pass code and access number to the requesting participant.

In one embodiment of the invention a participant may be authorized to engage in certain activities of a conference session but not all activities of the conference session. This feature is useful in that one or more conference rules that may be in effect in certain scenarios may call for a certain one or a number of authorized participants to have access to certain information that by law or other agreement should not be provided to certain other participants of the conference.

One example might be that of a conference that includes two or more attorneys and their clients attempting to reach a specific agreement surrounding a sensitive issue. In this case the attorneys would have certain access to information that they could share with each other but that should not be available to opposing clients of the deal. There are many levels in which such a scenario could be practiced in light of a fact that more than one media type may be active and in use in any given conference. For example, all of the participants may be approved for audio conferencing while only the attorneys have access to instant messaging within the conference with a stipulation that they can only instant message each other. In this way the attorneys can share evidence or other information without compromising their client's right to privacy.

Conference bridge application 204 is responsible for physically conducting the conference room including enabling ports, allocation of resources including bandwidth and port reservation. Conference bridge 204 authenticates participants if configured to do so before they can be allowed to participate in a conference. One authenticated, conference bridge 204 merges the incoming calls into the conference session by activating the appropriate ports, switches, and so on.

In a preferred embodiment conference bridge application 204 can be configured to control a remote point of access as well a primary point of access. For example, an audio conference can be set up at a telephony switch for conferencing using regular telephone head or handsets. At the same time, a text chat room maintained in a server remote from the switch can be controlled for a simultaneous chat session without requiring two separately scheduled conferences. This can be accomplished through conference manager application 203 by configuring two simultaneous conference bridges tied into and related to one conference session. In another embodiment a single conference bridge can be extended to control another domain by enabling remote command capability from the machine hosting the bridge application. The result is that the bridge can be extended virtually to any compatible communications platform.

Therefore, functions like adding a Web-browsing component to a COST audio conference in session can be implemented using telephone touch-tone commands from one of the participant's telephones, or through spoken voice if the session is IVR monitored, the IVR adapted with speech recognition software. Activation of such a command, if approved by conference manager 203 in one aspect will automatically set up, for example, a shared browsing session between included participants wherein the session parameters are aggregated and instructions and/or mechanisms for gaining access are made available to the selected participants.

Referring now back to Fig. 1 all participant stations 117-121 and 126-128 are illustrated as having access to a network-capable device. From switch 109 during a COST conference involving all of the participants, a request can be made to set up a Web-browsing component, which may be an automated presentation hosted in WS 115. The request can be initiated through IVR interaction and sent to server 113 for processing. Server 113 can configure WS 115 to serve the presentation and allow only those participants currently in the audio conference to access the presentation. Automatic instructions to the participants for navigating to WS 115 and beginning the presentation can be e-mailed a navigation link to the start page. WS 115 can be configured to wait until all of the invited participants are online and have successfully navigated to the start page. The presentation automatically launches when all participants are logged in and ready. Audio conferencing can ensue during the web presentation. There are many possibilities.

In one embodiment of the present invention a virtual conference bridge can be distributed to any machine that is a client application adapted for the purpose. In this embodiment, a conference location can be changed dynamically from machine to machine if necessary. For example, machines running a client application can be configured as a server wherein participants may navigate to and view presentation material or other data that is held on that machine. In this scenario, each participant of a conference may have a portion of a presentation prepared and held on that machine. In turn, the conference location in terms of the network or Internet-based portion of it can be changed dynamically from node to node until all of the data on all of the machines has been viewed by all of the participants. In this way extensive data uploads and document e-mailing back and forth during a conference can be avoided and the audio portion of the conference is still maintained in the conference switch.

In one embodiment of the present invention, two additional software enhancements are provided to software layers 200. An audio conference optimizer application (not shown) can be integrated with conference bridge application 204. The optimizer component is adapted to optimize the quality and number of connections that will exist between a corporate PBX analogous to CSW 109 described with reference to Fig. 1 above and any external Web-conferencing system that may be in use. This is accomplished through analyzing GroupWare system information related to current conference data. Incoming calls from conference participants are analyzed and grouped into a single audio call in order to minimize the amount of number connections that the PBX will have with an external conferencing system.

In the same embodiment described above, an audio conference dialer (not shown) is provided as part of conference manager 203 and is adapted to dial any particular conference participant who may have not dialed into the active conference after an allotted period of time for login and authentication has passed. The dialer can use "follow-me" services and/or "find-me services", both conventions known to the inventor, in order to locate the desired participant or participants.

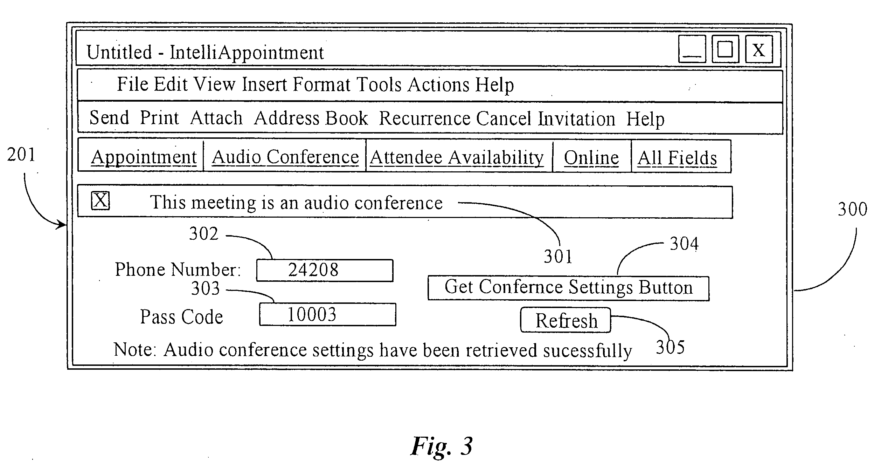

Fig. 3 is a screen shot of a client application 201 illustrating a conference creation confirmation according to an embodiment of the invention. As was previously described above, client application 201 is used as a GUI for practicing the present invention. In this example, application 201 exhibits a window 300 that shows confirmation of a submitted conference request that was created with the same application (request not shown).

Application 201 has all of the options, *File, Edit, View, Insert, Format, Tools, Actions,* and *Help* that are present with a generic interface for e-mail management and the like. Added options related to conferencing include an option button Recurrence for requesting conference recurrence settings in creating a conference, or for viewing settings that are already in place. Another option *Cancel Invitation* is also provided so that last minute changes can be made if it is decided to exclude a formerly invited participant.

An option *Appointment* is provided for setting up appointments or viewing appointments that are already on the calendar. An *Audio Conference* option is provided for enabling a participant to see what audio conferences are currently scheduled or planned. An option Attendee *Availability* is provided to enable a participant to see who is currently available for an ad-hoc conference or to view the itineraries of other potential participants. An option *Online* is provided for the purpose of enabling a participant to tell whether or not the participant is online and for checking online status of other participants. An option *All Fields* is provided for the purpose of enabling a participant to view all information in all fields at once in a scrollable window.

In this example, an audio conference has been requested and confirmed as illustrated by the presence of a checked box 301 informing the requesting participant that the just confirmed conference is an audio conference. Also provided with confirmation is a phone number listed a field box 302, and a pass code listed in a field box 303. Confirmation window 300 appears in the participant GUI after the participant has activated a *Get Conference Settings Button* illustrated herein as button 304. Button 304 will be grayed out if the conference request has been validated and accepted successfully and a confirmation of the conference appears. In one embodiment, a *Refresh* option illustrated herein as a button 305 is provided and associated with button 304 so that during submission of a request that initially failed a new attempt may be initiated by refreshing the screen.
In one embodiment that was described with reference to Fig. 2 above it was noted that the conference manager application may play a role in verifying itineraries of invited participants and in making alternate system recommendations in case original request parameters cannot be achieved. In this case, the original request might contain a warning, for example, that the planned itinerary for the request conflicts with one or more itineraries of invited participants. In this case, the requesting participant can modify the request accordingly and then activate the refresh button to resubmit the request in a second attempt to get conference settings. It is noted that in this example a text message at the bottom of window 300 informs that the conference settings were retrieved successfully. In this case the conference is now scheduled.

In one embodiment of the present invention a scheduled conference can be later modified without un-scheduling the conference. In this embodiment the requesting participant including other invited participants can make suggestions for modifying the original conference parameters. For example, a scheduled conference including a number of participants may have no conflicts related to a first scheduled occurrence but may exhibit itinerary conflicts with regards to one or more participants at certain scheduled recurrences of the conference. In this case the conference leader can take the suggestions into account and make any required modifications to the conference schedule.

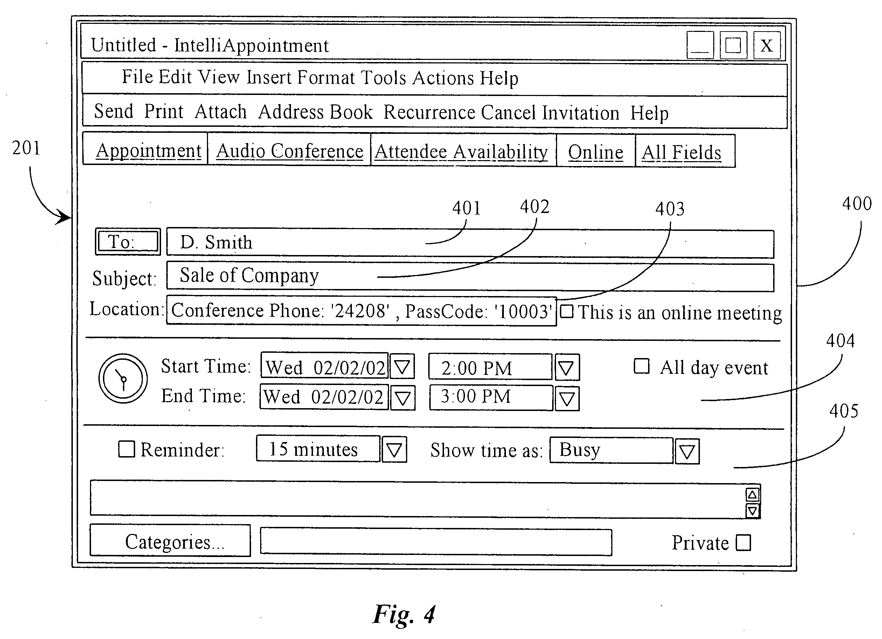

Fig. 4 is a screen shot of a client application 201 illustrating a sent notification of a scheduled conference to an invited participant according to an embodiment of the invention. Application 201 exhibits, in this example, a window 400 notifying an invited participant of a scheduled conference. Window 400 is identical to window 300 as far as the first three rows of options are concerned.

Window 400 has a "To" line 401 provided therein addressed to the participant that is receiving the notification. In this example, the notification is addressed to and received by D. Smith. A subject line 402 is provided to inform D. Smith about the subject of the conference, which in this example is the sale of a company.

A conference location field 403 is provided and contains the conference access phone number and authentication pass code. A separate check box is provided for indicating if the scheduled conference is an online meeting instead of a switch-based telephone conference. In this case the box is left unchecked indicating that currently there are no online components of the conference.

A window section 404 is provided and is adapted to display the conference start and end times including date and hour. A separate check box is provided in the same section for indicating if the conference is to be an all day event.

A section 405 of window 400 provides a reminder function that the receiving participant can configure to set up any specific reminders about the scheduled conference after receiving the original notification. In this case the participant D. Smith has selected 15 minutes before the scheduled start time in order to prepare for the conference. Another option is provided for displaying the time spent participating in the scheduled conference to others who may attempt to contact the participant while he is engaged. In this case D. Smith has selected show time as Busy. This indication can be applied to telephony system applications, call-waiting queues, presence applications, and on personal message machines.
In one embodiment of the present invention, the participant may be engaged in the conference but not engaged in use of an instant messaging application, or some other form of text messaging. In this case the participant may select show time as available for these specific applications. By default however the system may reserve these resources if they might be required in the conference. After receiving and accepting notification of a scheduled conference and configuring the reminder and show time functions, a message is sent back to the conference server confirming receipt and to enable the system to configure the desired reminder notifications and show time display.

In one embodiment of the invention where a participant has peripheral communications devices and/or applications that are not necessarily part of the conference implements but may be used to reach the participant, the system can access those devices and configure them to be unavailable during the conference or to report busy if someone attempts to reach the participant using that application or device during the conference. In this case, the participant has to pre-configure the system application with the required access information and remote configuration information attached to those devices. For example, if the participant chooses an IP telephony application running on a PC to participate in the conference and has a cell phone at his station, the system can access the cell phone if it is powered on and change the outgoing message (if remote message) is supported, or the system can notify a local gateway (if supported) that the participant will be unavailable for a certain period covered by the conference.

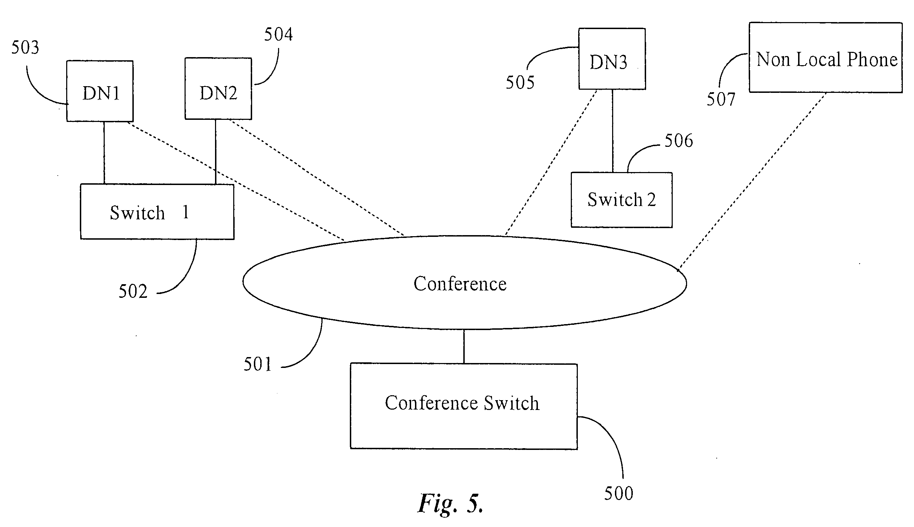

Fig. 5 is a block diagram illustrating general telephony hardware connection for an audio conference according to an embodiment of the present invention. A conference switch 500 is illustrated in this example and is analogous to CSW 109 described with reference to Fig. 1. Switch 500 is the location of the conference and in some embodiments the location of the conference bridge application as was already described. Conference 501 occurs according to schedule and when all participants have called in to switch 500 and have logged in typically through IVR interaction. In this example, participants calling in are illustrated as destination numbers (DN1) 503, (DN2) 504, (DN3) 505, and a participant using a non-local telephone 507.

Local switches representing typical PBX switches are illustrated herein as a (switch 1) 502, and a (switch 2) 506. It is noted herein that access to switch 500 may take various and sundry paths through a telephony network including access through network gateways as illustrated with respect to Fig. 1 above. For example DN1 and DN2 are accessing through network switch 502 whereas DN3 is accessing through network switch 506, the switches considered local to the conference switch 500. However a non-local telephone 507 is used to access switch 500 through another path that does not include any local switches. Telephone 507 may be a wireless phone operated from a long distance region through a roaming gateway. In any event, a network of conference switches and t-server applications can be scaled up to accommodate up to 25,000 participants simultaneously.

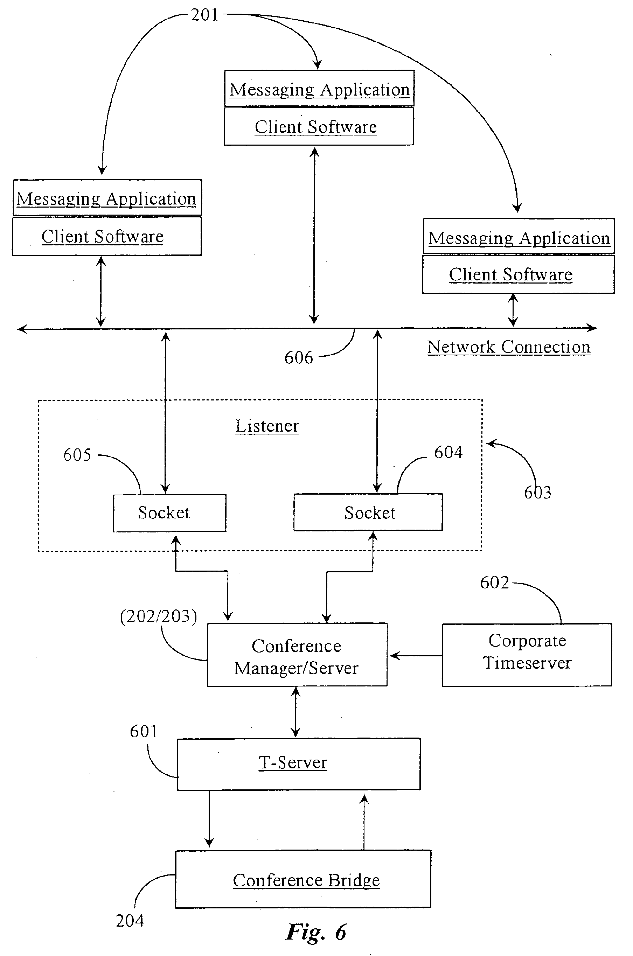

Fig. 6 is a block diagram illustrating a network architecture for setting up and managing conferences according to an embodiment of the present invention. Some of the components illustrated in this example are also illustrated in the example of Fig. 2 and therefore shall retain their original element numbers and shall not be reintroduced.
Client applications 201 of the software of the present invention are distributed to individual computer platforms of potential conference participants. Such computer platforms are analogous to stations 117-121 and 126-128 described with reference to Fig. 1 above. It is noted herein that a computing platform hosting client application 201 need not be a fixed platform in order to practice the present invention. In some embodiments client application 201 is distributed to a mobile wireless computing platform such as a wireless Laptop computer or an IP-capable cellular telephone. All that is required to host application 201 is a computing device that is network-capable.

Client applications 201 communicate from their respective host devices over a network connection illustrated herein as network connection 606. Connection 606 represents any type of digital network that can be adapted to support communication according to messaging protocols.

Conference Manager/Server application (202, 203) resides in a preferred embodiment on a network-connected server. The mentioned server has a network listening component 603 comprising a socket 604, and a socket 605. Sockets 604, and 605 are adapted to detect communications from client applications 201 in the course of practicing the invention. There may be many more than two sockets used in actual practice. Moreover, there may be more than one server hosting an instance of application (202,203) without departing from the spirit and scope of the invention. The inventors illustrate a minimum number of components to simplify illustration and that are sufficient for explanation purposes.

A corporate time server 602 is provided and is directly connected to application (202, 203) for the purpose of serving correct time for conference and appointment scheduling and launching purposes. Server 602 may reside in the same host machine as application (202, 203) or it may reside in a separate machine.

A T-server component 601 is provided in some embodiments to mediate communication that occurs between application (202, 203) and conference bridge 204. T-server 601 is analogous to T-server illustrated on processors 104 and 108 described with reference to Fig. 1. In this exemplary network architecture, communication runs bi-directionally as is illustrated. T-Server component 601 is known to the inventors and is adapted to transform data-network-based command structure into CTI protocols for convenient management of telephony apparatus.

In basic practice of the invention, a potential conference participant may execute a client application 201 to initiate a conference request, which if accepted will automatically set-up a scheduled conference. An initiated request is received through one of sockets 604, 605 of listener 603 on a host server hosting application (202, 203). Application (202, 203) processes the request and sends confirmation back to the client application 201 that initiated the request. Timeserver 602 provides all of the timing functions needed for sending alerts, notifications, and for scheduling the conference to execute.

After confirmation a request for a conference is sent, application (202, 203) sends notifications of the pending conference to all of the invited participants listed in the original request. As participants receive their notification, they can interact with the GUI interface to set up future reminders so that they are alerted at an appropriate time before conference launch. As launch of a conference nears a pre-set deadline, application (202, 203) endeavours to configure Conference Bridge 204, which in a preferred embodiment resides in the machine hosting the active conference or in a processor immediately accessible to the switch. This is not, however, required to practice the present invention as conference bridge 204 can be provided with T-server 601 or even with conference manager /server (202, 203) on a same machine. Conference bridge 204 physically hosts the conference although conference manager (202, 203) participates in certain functions like number management, conference monitoring, schedule management, serving notifications, serving alerts, and serving new invitations, and in some cases notifications for merging in new media channels after a conference has begun if so desired.

One with skill in the art of network architectures will appreciate that the method and apparatus of the present invention can be practiced on virtually any type of data network or combination of data networks without departing from the spirit and scope of the present invention. In a preferred embodiment all participants have a computing platform connected to the Internet network and can use the Internet and any connected sub networks as architecture over which the methods of the present invention may be practiced. Moreover, actual conferencing can take place over COST connections and shared bandwidth connections simultaneously with seamless merging of COST calls, IP calls, and networking functions.

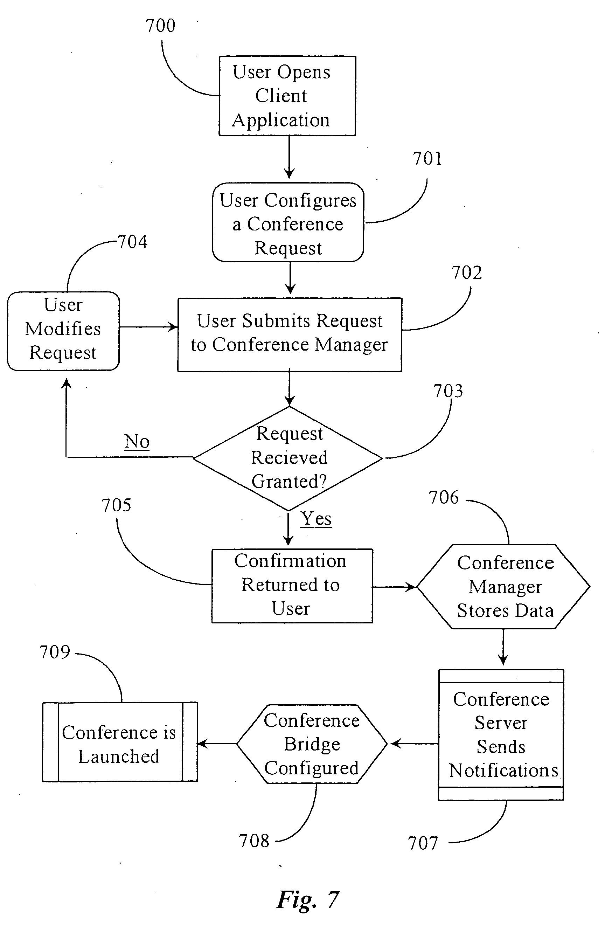

Fig. 7 is a process flow diagram illustrating steps for creating and launching an audio conference according to an embodiment of the invention. At step 700 a user opens a client application analogous to CL described with reference to Fig. 1 above. The application includes two main components, a messaging program and a COM application that is manipulated through user interface to create a conference request.

At step 701 the user operating the client application of step 700 configures a conference request. Step 701 includes at least the names of all of the participants that will be invited to the conference and the proposed time, data and any recurrence settings for repeating the conference. Step 701 also includes configuring the primary media type for the conference and if desired, a subsequent media type to be utilized or at least made available to some or all of the invited participants.

The configured request is submitted to a conference manager application for processing at step 702. The conference manager application includes a server component for communication purposes. At step 703, the conference manager application receives the conference request configured at step 701 and makes a decision whether or not to grant the request based on the information provided and on any information aggregated by the conference manager after receiving the request.

In one embodiment of the invention, all of the required data about participant availability, itinerary, and methods available to the participants in terms of media types available and media device information available is discoverable during the process of request configuration at step 701. Discovery of data may include reviewing itineraries to ensure that the proposed time and date for the conference does not conflict with any of the participant itineraries.

In another embodiment, only the basic identification data about the desired participants and the proposed time window and data of the conference is configured at step 701 and then submitted at step 702. In this case, at step 703, the conference manager crunches itinerary data and media availability based on the proposed time frame for the conference and makes a decision on whether the conference can be immediately confirmed or whether some parameters may have to be changed based on found data results.

At step 703, if the conference manager cannot validate the submitted conference request based on the submitted data and any aggregated data, the request is denied and at step 704, the user may modify the request for re-submission again at step 702. In one embodiment, at step 703 in the event of a denial, the conference manager may make an alternate recommendation including listing times when all of the participants will be available for a conference according to latest itinerary information aggregated by the manager application. At step 704 the user may simply accept the recommendation from the conference manager and resubmit the request.

It is noted herein that submitting a request is analogous in one embodiment to user activation of an interface action button termed "Get Conference Settings" described with reference to action button 304 of Window 300 illustrated in the example of Fig. 3 above. In another embodiment, a simple submit request action button may be provided. There are many possibilities. The exact functionality provided and associated with the step of configuring a conference will depend partly at least on what the responsibility of the user will be in terms of manual data gathering. It is duly noted herein that it is possible that the conference manager aggregate and provide all participant contact and availability information either during or after submission of a conference request.

If at step 703, the conference manager accepts and validates the submitted request, then at step 705 a confirmation of the successful submission is returned to the user that configured the original request. The confirmation includes all of the required conference settings including start time and date and end time and date of the conference. Authentication pass code and conference access number is also provided. In some cases, authentication is not required and only the access number is sent along with the other conference settings.

At step 706, the conference manager stores all of the accepted data about the upcoming conference into a temporary data store, which is designed to execute the conference according to calendar and time parameters provided by a corporate timeserver function. It is noted herein that the time parameters may vary from the perspective of participants who will be accessing the conference from a geographical location beyond the time zone of the conference location. The timeserver makes the appropriate adjustments for each participant for which they are required.

At step 707 the conference manager, through the conference server component, send notifications about the upcoming conference to all of the participants that are invited to the conference. The conference manager may make certain decisions about media type used to send notification based on participant itinerary and personal preference information known about the invited participants. For example, some participants receive a simple auto-generated e-mail notification while others may receive an automated telephone notification or even a page message to call in for new conference information. The participants then can be notified according to their status at the time of notification process.

When the execution time of the conference arrives the conference manager, through the conference server configures the conference bridge application for physically hosting and merging calls coming into the conference according to the conference schedule. Once the bridge application is configured the conference is launched and ready to receive participants at step 709. Additional steps for sending conference reminders may be included between steps 707 and 708 as some participants will configure a response requesting the reminder when they receive their notification, using the client application interface to respond.

It will be apparent to one with skill in the art that the steps of this example may be added to or taken from without departing from the spirit and scope of the present invention. For example, in one case where a user is responsible for all of the conference data verification, the request is automatically set up and validated at step 703 and there would be no modification required at step 704.

In another case, steps may be added for user-initiated conference settings modification or change order between the point of notification at step 707 and configuring of the conference bridge at step 708. There are many possibilities. The inventor intends that the process identified and described herein represent one exemplary process for practicing the present invention according to a preferred embodiment.

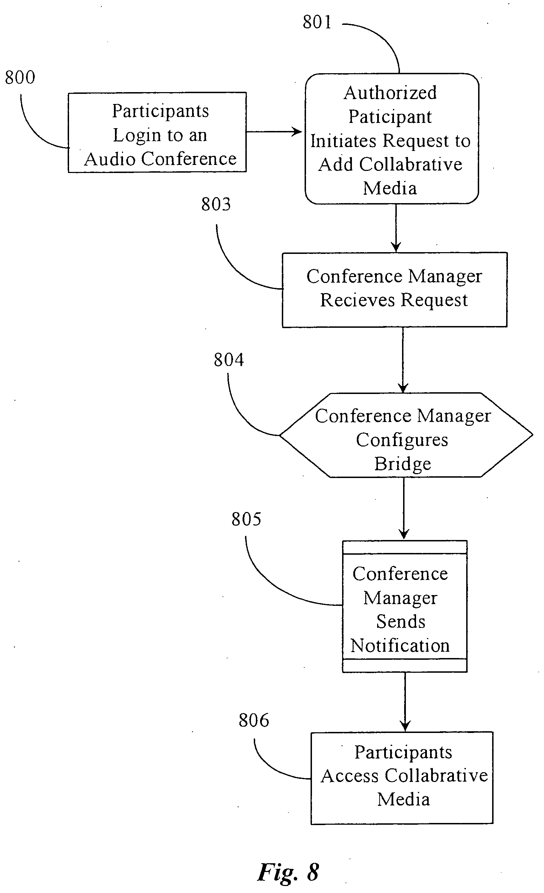

Fig. 8 is a process flow diagram illustrating steps for synchronizing a Web-based groupware application into an audio conference according to an embodiment of the present invention. At step 801, all participants of a scheduled conference log into the conference. Step 801 naturally follows step 709 described with reference to Fig. 7. It may be assumed in this example the active conference is an audio telephony conference bridging at least COST calls and possibly COST calls and Internet protocol network telephony (IPNT) calls.

At some point during the active conference, an authorized participant, perhaps a conference leader or host initiates a request to add collaborative media capability to the active conference at step 801. The collaborative media type may be some Groupware application like Chat, Messaging, White boarding, or a collaborative Web-browsing session such as a "follow-me" Web session.

Step 801 can be accomplished in a number of ways. In one embodiment the participant of step 801 pushes a key or series of keys on his or her telephone set that have been pre-set to command a specific Groupware media type. In this case an IVR is programmed to receive the input and to forward the command to the conference manager application over a data link. At step 803 then, the conference manager receives the request.

In another embodiment at step 801 the participant vocalizes a command or a series of commands that is recognized by the IVR system. In still another embodiment the conference manager actually monitors the particular telephony device or keyboard (if IPNT) and automatically understands an issued keystroke command performed at a computer interface.

At step 804, the conference manager configures a second bridge at another location for holding a parallel conference using the Groupware media type selected. It is important to note herein that if there is a conference leader, then it is logical that he or she will have administrative control over the conference and any additional media types accessible to the conference participants. This may also include control over which participants will be able to access or participate in the selected media type. For example, by selecting numbers on the telephone dial interface a participant can identify which participants of the active conference will be included in the request. This assumes that the dial numbers are equated to certain participants, perhaps according to the order of login to the active conference. Voice activation can also be used to accomplish assignment of additional media from within the domain of the active conference.

At step 805 the conference manager sends notification and access instructions to the participants that are part of the new request. The method and vehicle for including the selected participants into the new interaction will depend partly on the media type. For example, if the participants are invited to a serve-hosted chat while the audio conference is in progress, then the conference manager may send a link to the chat location (bridge) and a password for entering the text chat.

At step 806 the selected or invited participants access the collaborative media type. This step can be a push scenario or a pull scenario. In one embodiment a collaborative Web-browsing session can be initiated wherein connections to the selected participants are established wherein a master/slave computer control scenario is practiced similar to some Groupware functionality that is already known in the art.

In one embodiment Web browsers running on the selected participant computers are automatically invoked, assuming the participants are all connected online, and navigate according to navigation actions performed on the computer of the conference host or leader. Collaborative White boarding and collaborative presentations can also be accomplished while all of the participants maintain audio capability in the conference.

In one embodiment of the invention the steps above can be modified to reflect telephone connection capability as the second media type. In this case at step 800 the conference can be an online group chat and in step 801 the initiated request can be for an ad-hoc telephony conference to be set up and launched for some or all of the chat participants. In this case, the conference manager can receive a request initiated from the client application running on the conference leaders host system. In one embodiment desired participants can be selected by mouse over or highlighted followed by a keystroke, which sends the command to the conference manager. The conference manager would then configure a G3 conference bridge for the ad-hoc conference and send notification to participants as previously described with respect to Fig. 7.

In still another embodiment the conference bridge can be configured with an outbound dialing software capable of dialing each participant by telephone number wherein the conference ensues when all have picked up their calls. There are many possibilities.

It will be apparent to one with skill in the art that the exact order and number of steps for managing additional media types from an active conference can vary somewhat without departing from the spirit and scope of the present invention. The variances will depend in part on the type of primary media used for the conference and what the added media type or capabilities will be.

The method and apparatus of the present invention can be practiced on a variety of network configurations using a variety of access paths, and devices without departing from the spirit and scope of the invention. Audio conferences can be conducted wherein participants use access devices that are different from each other and where access is obtained from disparate networks using various paths.

The methods and apparatus of the present invention should be afforded the broadest possible scope under examination in light of the many possible embodiments, many of which have been described herein. The methods and apparatus of the present invention should be limited only by the claims that follow.

## Claims

1. A software-hardware system for managing a conference of at least two participants communicating on a communications network comprising:
at least one conference node supporting a plurality of communication ports, the node accessible to the communications network;
at least one sever node connected to the conference node; and
a computing platform connected for communication to the at least one sever node;
**characterized in that** a user operating from the computer platform using a client software application configures and initiates the conference, the conference scheduled for launch by the at least one server node running a parent software application, the at least one server node managing the conference settings and configuring the at least one conference node for physically hosting the initiated conference in time for the scheduled conference execution, and wherein conference participants can access the conference from dissimilar network domains utilizing dissimilar communications apparatus.

2. The system of claim 1 wherein the communications network comprises a connection-oriented-switched-telephony network and a data-packet-network, the system functioning to integrate the telephony environment with a data-network-based Groupware system environment.

3. The system of claim 2 wherein the telephony network is a public-switched-telephone-network and the data-packet-network is the Internet network.

4. The system of claim 1 wherein the conference is an audio conference and the communications devices capable of participation include a PSTN-based telephone, an Internet-based telephone and a wireless network telephone.

5. The system of claim 1 wherein the conference is an audio conference wherein certain ones of the participants employ PSTN-based communications devices and certain ones of the participants employ data-network-telephony applications to access and participate in the same conference.

6. The system of claim 1 wherein the conference is an audio conference integrated with a separate Web conference, the Web conference conducted using a synchronous Groupware application.

7. The system of claim 6 wherein the Web-conference is initiated from within the domain of the audio conference after the audio conference has begun.

8. The system of claim 1 wherein at least one conference node is a PBX telephony system.

9. The system of claim 1 wherein the computing platform is the operating platform of a computer station.

10. The system of claim 1 wherein the computing platform is the operating platform of a communications device.

11. The system of claim 1 wherein the computing platform is the operating platform of a computer peripheral device.

12. The system of claim 1 further comprising a transaction server application functioning as a proxy server between the parent application and the conference node, the transaction server responsible node configuration.

13. The system of claim 1 wherein the server node is a WEB-server and the conference node is a Web-server.

14. The system of claim 1 wherein the server node and the conference node are the same physical machine.

15. A software suite for enabling and managing a conference hosted on a network for communication comprising:
a client application serving as a user interface for configuring a conference and for receiving notification thereof;
a parent application including a server component for managing conference settings and for serving notifications and alerts related to a scheduled conference; and
a conference bridging application for physically bridging incoming communications into an active conference in session;
**characterized in that** the software suite controls both telephony apparatus and data-network apparatus including a Groupware system to enable seamless conferencing using more than one type of communications device and more than one type of synchronous media.

16. The software suite of claim 15 wherein the client application is distributed to an end node, the parent application runs on a network server, and the bridging application is distributed to a processor controlling a PBX telephony switch.

17. The software suite of claim 15 wherein the communications network comprises a connection-oriented-switched-telephony network and a data-packet-network.

18. The software suite of claim 17 wherein the telephony network is a public-switched-telephone-network and the data-packet-network is the Internet network.

19. The software suite of claim 15 wherein the suite integrates a PSTN-based telephony system with a DPN-based Groupware system.

20. The software suite of claim 15 wherein the conference is an audio conference and the communications devices capable of participation include a PSTN-based telephone, an Internet-based telephone and a wireless network telephone.

21. The software suite of claim 15 wherein the conference is an audio conference wherein certain ones of the participants employ PSTN-based communications devices and certain ones of the participants employ data-network-telephony applications to access and participate in the same conference.

22. The software suite of claim 15 wherein the conference is an audio conference integrated for command and management functions with a Web conference using a synchronous Groupware application.

23. The software suite of claim 15 wherein the Web-conference is initiated from within the domain of the audio conference.

24. The software suite of claim 15 wherein the client application includes an electronic messaging application integrated with a common object modelling application.

25. The software suite of claim 15 wherein the conference bridging application runs on one of a PBX telephony switch or on a processor having connection to the switch.

26. The software suite of claim 15 further comprising a transaction server application functioning as a proxy server between the parent application and the conference bridging application.

27. The software suite of claim 15 wherein the parent application has access to participant data including participant itineraries stored and managed by a Groupware system, certain portions of the data used to validate a submitted conference request.

28. A method for creating and executing a multimedia conference hosted on a communications network comprising steps of;
(a) generating a conference request including participant identification and date and time parameters for conference execution;
(b) submitting the request to a remote server;
(c) processing the request at the server for correct data and if granted returning conference settings to the requestor;
(d) sending notification of the conference including conference settings to the invited participants; and
(e) configuring a conference node to physically bridge the conference participants upon time-based execution.

29. The method of claim 28 wherein the communications network comprises a connection-oriented-switched-telephony network and a data-packet-network, the multimedia conference set to integrate the telephony environment with a data-network-based Groupware system environment.

30. The method of claim 28 wherein in step (a) the conference request is generated from a client application running on a computer platform.

31. The method of claim 28 wherein in step (a) the computing platform operates one of a computer, a communications device, or a computer peripheral device.

32. The method of claim 28 wherein in step (a) participant identification information is known to a Groupware system the information made available to the client application.

33. The method of claim 28 wherein in step (a) the generated request includes identifying the network host and media presence for conference.

34. The method of claim 28 wherein in step (a) the date and time parameters include recurrence settings.

35. The method of claim 28 wherein in step (b) the server has access to updated information about identified participants including itinerary.

36. The method of claim 34 wherein in step (c) the returned conference settings include modifications to the submitted time and date data, the modifications based on most recent availability data of the participants.

37. The method of claim 28 wherein in step (a) all of the most recent participant information including itinerary is available rendering step (c) unnecessary.

38. The method of claim 28 wherein in step (d) vehicles utilized to send the notifications are selected in part according to participant preferences.

39. The method of claim 28 wherein in step (d) notifications are sent by one or a combination of Groupware messaging system, e-mail system, or IVR-assisted telephone call.

40. The method of claim 28 wherein in step (d) the notifications contain interactive option for response with a reminder request.

41. A method for launching a second conference from within the domain of a first conference in session comprising steps of;
(a) engaging an interactive option to add a media application as a second conference tool;
(b) identifying the participants of the conference that will have access to the tool;
(c) configuring a second conference bridge for the new media type; and
(d) sending notification to the active participants, the notification containing instructions and or mechanisms for enabling access to the second conference.

42. The method of claim 41 wherein in steps (a) and (b) the interactive option including participant identification is activated by an application-recognized touch-tone button sequence performed from a telephone during an audio conference, the second conference activated being one of a text-based session, a white board session, or a collaborative browsing session made available to the identified participants.

43. The method of claim 41 wherein in step (a) and (b) the interactive option including participant identification is activated by an IVR-recognized command sequence spoken during an active audio conference, the second conference activated being one of a text-based session, a white board session, or a collaborative browsing session.

44. The method of claim 41 wherein in step (a) and (b) the interactive option including participant identification is activated by a series of computer mouse operations performed from a computer interface during an on-line conference session, the second conference activated being one of an audio conference.

45. The method of claim 41 wherein in steps (a) and (b) the interactive option including participant identification is activated by a series of computer keystrokes performed from a computer interface during an online conference session, the second conference activated being one of an audio conference.

46. The method of claim 41 wherein in step (c) the second bridge configured controls a chat server.

47. The method of claim 41 wherein in step (c) the second bridge configured controls a telephony switch.

48. The method of claim 41 wherein in step (c) the second bridge configured controls a computer end-node.

49. The method of claim 41 wherein in step (d) the notification contains a pass code and a telephone access number.

50. The method of claim 41 wherein in step (d) the mechanism is an embedded hyperlink providing browser navigation instructions.

51. A software application for enabling and managing a scheduled telecommunications conference hosted in a conference node comprising:
a conference management component; and
a conference bridging component;
**characterized in that** the conference management component optimizes to a minimum the number of physical connections required of the conference by the conference bridge through pre-identification of and aggregation of participants accessing the conference through a same local switch and merging those connections into a single connection from the local switch to the conference node.

52. The software node of claim 51 wherein the conference node and the local switch are telecommunications switches.

53. The software application of claim 51 wherein the local switch is a telephony switch and the conference node is a Web server.

54. The software application of claim 51 wherein the conference is an audio conference integrated for command and management functions with a Web conference using a synchronous Groupware application.
